# EUROPÄISCHE PATENTSCHRIFT

(11) **EP 0 800 485 B1**
(45) Veröffentlichungstag und Bekanntmachung des Hinweises auf die Patenterteilung: **16.08.2000**
(21) Anmeldenummer: 95942013.4
(22) Anmeldetag: 15.11.1995
(51) Int. Cl.: C03B 5/187

(54) **RÜHRER FÜR SCHMELZFLÜSSIGES GLAS**
MOLTEN GLASS STIRRER
MELANGEURS POUR VERRE EN FUSION

(30) Priorität: 15.11.1994 DE 4440704
(43) Veröffentlichungstag der Anmeldung: 15.10.1997
(73) Patentinhaber: Technische Glaswerke Ilmenau GmbH, 98693 Ilmenau (DE); Degussa-Hüls Aktiengesellschaft, 60311 Frankfurt am Main (DE)
(72) Erfinder: KÜMMERLING, Andreas, D-98693 Ilmenau (DE); SCHWIEGER, Christian, D-98693 Ilmenau (DE); HEYM, Volker, 98693 Illmenau (DE); STIEBERT, Dietmar, 98693 Illmenau (DE); ECKERT, Wilfried, 63549 Ronneburg (DE); GÖLITZER, Hubertus, 63755 Alzenau (DE)
(74) Vertreter: Liedtke, Klaus, Dr.
(86) Internationale Anmeldenummer: DE9501585
(87) Internationale Veröffentlichungsnummer: WO9615995

(56) Entgegenhaltungen:
- DD-A- 203 899
- DE-A- 3 119 816

## Beschreibung

Die Erfindung betrifft den konstruktiven Aufbau von Rührern für schmelzflüssiges Glas, vorzugsweise zur Homogenisierung von Glasschmelzen in höheren Temperaturbereichen.

Rührer zur Homogenisierung von Glasschmelzen sind in unterschiedlichen Ausführungsvarianten in der Glasindustrie bekannt und im Einsatz. Der zeitliche sowie qualitative Homogenisierungserfolg ist im wesentlichen durch den konstruktiven Aufbau der Rührer und durch die Materialien, im wesentlichen das Kontaktmaterial zum Glas, bestimmt. Bei leichtschmelzenden und wenig aggressiven Gläsern sind in der Konstruktion einfache Blatt- und Schraubenrührer aus hochwertigen Feuerfestmaterialien bekannt, die jedoch eine nich ausreichende Homogenisierung erzielten, kurze Standzeiten besaßen und durch den hohen Materialabrieb ständig zu unerwünschten Glasfehlern führten. Rührer aus hitze- und zunderbeständigen Stählen konnten und können nur in begrenzten Fällen eingesetzt werden, da diese Stahlarten z. T. zur Verfärbung und Blasenbildung des Glases führen und gegenüber aggressiven Glasbesdandteilen wenig beständig sind. Deshalb haben sich Rührer, die als Glaskontaktwerkstoff ein Material der Edelmetallgruppe besitzen, für fast alle technischen Glasarten bewährt und werden wie bekannt im verstärkten Maße erfolgreich eingesetzt.

In einer Reihe von Patenschriften ist der Aufbau von bekannten Rührerkonstruktionen für die Homogenisierung von Glasschmelzen beschrieben.

In der DE-A-43 26 143 ist dargestellt, daß der Rührer oder Plunger aus einem Molybdänkern sowie einem Keramikkörper und einem Überzug aus Platin besteht. Die DE-A-19 16 817 gibt an, daß die Poren des feuerfesten Stoffes mit einem gegen Molybdän, den feuerfesten Stoff und Platin inerten Gas gefüllt sind. In der DE-A-25 00 793 wird der Aufbau besonders des Schaftbereiches eines Molybdänrührers beschrieben, der von einem Platinrohr umgeben ist und dessen Zwischenraum von einem Inertgas durchströmt ist.

Der Rührer nach dem Patent DD-C-203 899 besteht aus einem in das Glas eintauchenden Molybdänteil und einem Schaft aus einem hitzebeständigen Stahl. Der Schaft ist innen hohl und mit Luft gekühlt.

Alle diese Rührer sind aus verschiedenen Materialien aufgebaut und erfordern die Zuführung eines Inertgases als Schutz gegen Oxydation der Molybdänteile.

Die Kombination der verschiedenen Materialien bei hoher Temperatur ist aufgrund unterschiedlicher Ausdehnungen und der Oxydationsanfälligkeit des Molybdäns in der Praxis mit Problemen verbunden. Auch die Zuführung von Inertgas oder Kühlluft ist bei hohen Temperaturen störanfällig.

Nachteilig sind bei diesen bekannten Rührern außerdem der hohe Materialeinsatz der reinen Edelmetalle und deren Legierungen, der die Investkosten erheblich erhöht, sowie ihr begrenzter Einsatzbereich bei hohen Temperaturen, die zur Zerstörung der Rührer führen. Durch die Verwendung von stabilisierten und dispersionsverfestigten Edelmetallen, vorzugsweise Platin oder Platin/Rhodium-Legierunge, wird eine entscheidende Einsatzerweiterung dieser Rührer bei erschwinglichen Investitionskosten, ausreichender Lebensdauer und guter Glasqualität erzielt. Aus der Praxis, aus Prospektmaterial und der Literatur (Glastechnische Berichte 65, 1992 Nr. 4, S. 99 u. ff) ist der Einsatz von feinkornstabilisieitem und dispersionsgehärtetem Platin oder entsprechenden Platinlegierungen für die Zwecke der Glasherstellung bekannt. Rührer, Plunger oder andere Homogenisierungseinrichtungen für Glasschmelzenn sowie Zentrifugen oder Düsen für die Glasfasernherstellung sind vorzugsweise aus diesen feinkornstabilisierten dispersionsverfestigten Edelmetallen oder Edelmetall-Legierungen, speziell Platin oder Platin-Rhodium-Legierungen hergestellt.

Um die immmer noch hohen Edelmetallanteile weiter zu senken, sind zunehmend Rührer bekannt, die aus mehreren Schichten unterschiedlicher Materialien bestehen und als Glaskontaktschicht eine sehr dünne Edelmetallschicht aufweisen. Die tragende Schicht dieser bekannten Rührer besteht vorzugsweise aus Molybdän oder Wolfram; diese Edelmetallschicht wird durch keramische Materialien gegenüber dem Trägermaterial geschützt. Da die Tragermaterialien bei ca. mehr als 600 °C oxydieren, muß der Innenraum des Rührers luftdicht verschlossen und evakuiert sein. Hieraus ergeben sich die Nachteile dieser Rührer mit Schichtaufbau. Da die Edelmetalle bzw. deren Legierungen nicht gasdicht sind und schlecht ausgeführte Schweißnähte des Rührers ein Eindringen von Luftsauerstoff ermöglichen, wird das Trägermaterial in kürzester Zeit zerstört, ein Totalausfall des Rührers ist die Folge.
Außerdem ergeben sich durch unregelmäßige Glasströmungen erhöhte Glasfehler.
Desweiteren ist nach der Pat. Abstr. of Japan, C - 354, Abstr. JP 61 - 21 923 (A) eine Rühreinrichtung mit Aufbauten als Vollschraube bekannt, wobei der Vollstab aus Stahl besteht.
Die Glasströmung wird mittig nach oben geführt, die oberen Glasschichten werden jedoch aufgrund der geschlossenen Konstruktion des Rühreibehälters nicht mit vermischt. Der Rührer bewirkt sowohl horizontal als auch vertikal nur eine teilweise Durchmischung des schmelzflüssigen Glases. Die Aufgabe der Erfindung besteht darin, den konstruktiven Aufbau eines Rührers zum Homogenisieren von schmelzflüssigem Glas in hohen Temperaturbereichen mit Grundbauteilen so zu gestalten, daß der Rührer einen geringen Materialeinsatz besitzt, ausschließlich aus Edelmetallen und/oder Edelmetallegierungen besteht und bei einer höheren Lebensdauer eine gleichbleibend gute Glasqualität erzeugt.

Erfindungsgemäß wird die Aufgabe durch den Rührer gemäß Anspruch 1 gelöst.
Das tragende Element des Rührers innerhalb der erfindungsgemäßen Gerüstkonstruktion ist der zylinderförmige Rührerschaft, der erfindungsgemäß hohl ausgebildet ist. Der Rührer ist erfindungsgemäß dadurch gekennzeichnet, daß der hohle Rührerschaft über der in das Glasbad eintauchenden Höhe Rühreranbauten besitzt und im Inneren durch zylinder- oder flächenförmige Rührerschaftsversteifungen gegen Verdrehungen stabilisiert ist. Außerdem kann der zylinderförmige Rührerschaft kreuz- und/oder segmentförmige Versteifungen besitzen. Die Rühreranbauten werden erfindungsgemäß von den durch Rührerschaftbohrungen hindurchragenden Rührerschaftversteifungen gebildet.

Der obere Teil des Rührerschaftes ist nach bekannten Lösungen so gestaltet, daß ein problemloses und schnelles Wechseln des Rührers zur Rührerantriebsmaschine erfolgt.
Der untere Teil des Rührerschaftes ist bevorzugterweise mit einer annähernden runden Kappe vollständig verschlossen. Zur Erreichung einer guten Homogenisierung wird das schmelzflüssige Glas durch eine ausreichend hohe Rotationsgeschwindigkeit des sich drehenden Rührers vermischt.
Gleichzeitig wird durch die Drehbewegung des Rührers das Glas in einer vertikal aufsteigenden oder vertikal absteigenden Fließrichtung ständig in seiner Höhenlage verändert. Die Dreh- und Vertikalbewegungen des Glases werden durch die seitlichen Rühreranbauten an den Rührerschaft erreicht. Die Anzahl der Rühreranbauten an den Rührerschaft ist durch deren Druckflächen und die daraus resultierenden Kräfte auf den Rührerschaft begrenzt. Der Rührer besitzt eine verfahrenstechnisch optimale Anzahl von Anbauten an den Rührerschaft mit einzelnen großen Scherflächen.

Im einfachsten Fall ist der Rührerschaft in bestimmten Höhenabständen mit gegenüberliegenden Bohrungen versehen, durch welche zylinderförmige, an beiden Enden gerundet verschlossene Rohre durchgesteckt und mit dem Rührerschaft verschweißt sind. Es entsteht dadurch ein Rührer mit mehreren zylinder- oder flächenförmigen Rühreranbauten, die das Glas homogenisieren.
Eine optimale Verdrehfestigkeit des Rührerschaftes kann dadurch erreicht werden, daß in bestimmten Winkeln versetzt über der gesamten Glasstandshöhe mehrere zylinderförmige Rührerschaftversteifungen im Innenraum des Rührers angeordnet sind. An einem Rührerschaft mit großem Durchmesser sind kleine flächenförmige Rühreranbauten an einem Ende einer inneren Versteifung befestigt und je nach Fläche größere flächenförmige Rühreranbauten an den Enden mehrere Rührerschaftsversteifungen angebracht.
Sind ausreichend Rührerschaftsversteifungen über der gesamten Glasstandshöhe vorhanden, so sind die flächenförmigen Rühreranbauten an jeder beliebigen Stelle des Rührerschaftes befestigt. Außerdem ist ein Durchstecken von flächenförmigen Rühreranbauten durch den Rührerschaft, vorzugsweise schraubenförmig angeordnet, möglich.
Beträgt der Durchmesser des Rührerschaftes bis 90 % des Rührzellendurchmessers, so besitzt der Rührer stern-, kreuz- oder segmentförmige Versteifungen oder eine Kombination aus diesen Versteifungen, die zusammen die tragenden Elemente des Rührerschaftes darstellen. Die äußere Kontur des Rührerschaftes für die Rühreranbauten ist zylinderförmig. Bei einer bevorzugten Auführung sind die Enden der segmentförmigen Versteifungen gleichzeitig als Rühreranbauten ausgebildet. Die Enden der Rührerschaftversteifungen sind als zylinderförmige oder flächenförmige Rühreranbauten ausgebildet. Für höchste Beanspruchungen kann der verbleibende Hohlraum im Rührerschaft und in den kreuzförmigen Versteifungen mit einer keramischen, pulverförmigen Masse ausgefüllt sein, die im Temperaturbereich ca. mehr als 800 °C versintert, aber trotzdem offenporig porös für einen ständigen Luftaustausch ist. Dazu besitzt jede Rürhrerschaftversteifung im Rührerschaft eine oder mehrere Ausdehnungsöffnungen, die bei Temperaturerhöhung einen Druckausgleich gewährleisten.

Der Vorteil des erfindungsgemäßen Rührers besteht im minimierten Einsatz von Edelmetallen und Edelmetallegierungen aufgrund des erfindungsgemäßen konstruktiven Gerüstaufbaus des Rührers. Durch die Verwendung von ausschließlich Edelmetallen wird der bekannte Mehrschichtenaufbau des Rührers aus unterschiedlichen Metall- und Keramikmaterialien vermieden und somit die Lebensdauer des Rührers wesentlich erhöht.

Eine Reparatur defekter Rührer ist durch den einfachen konstruktiven Aufbau leicht möglich. Eine vollständige Erneuerung einzelner defekter Rührerbauteile ist durch ihre Austauschbarkeit kurzfristig und zeitsparend ausführbar.

Die erfindungsgemäßen Rührer sollen anhand von Ausführungsbeispielen näher erläutert werden.

In den Figuren stellen dar:
- Figur 1: - eine geschnittene Draufsicht mit Rührerschaftversteifungen und Rühreranbauten
- Figur 2: - eine Seitenansicht der Figur 1 mit unterbrochenen flächen förmigen Rühreranbauten
- Figur 3: - einen Seitenschnitt eines Rührerschaftes mit zylinderförmigen Rühreranbauten
- Figur 4: - eine geschnittene Draufsicht der Figur 3
- Figur 5: - einen Seitenschnitt eines Rührerschaftes mit zylinderförmigen Rührerschaftversteifungen und flächenförmigen Rührer anbauten
- Figur 6: - eine geschnittene Draufsicht der Figur 5.

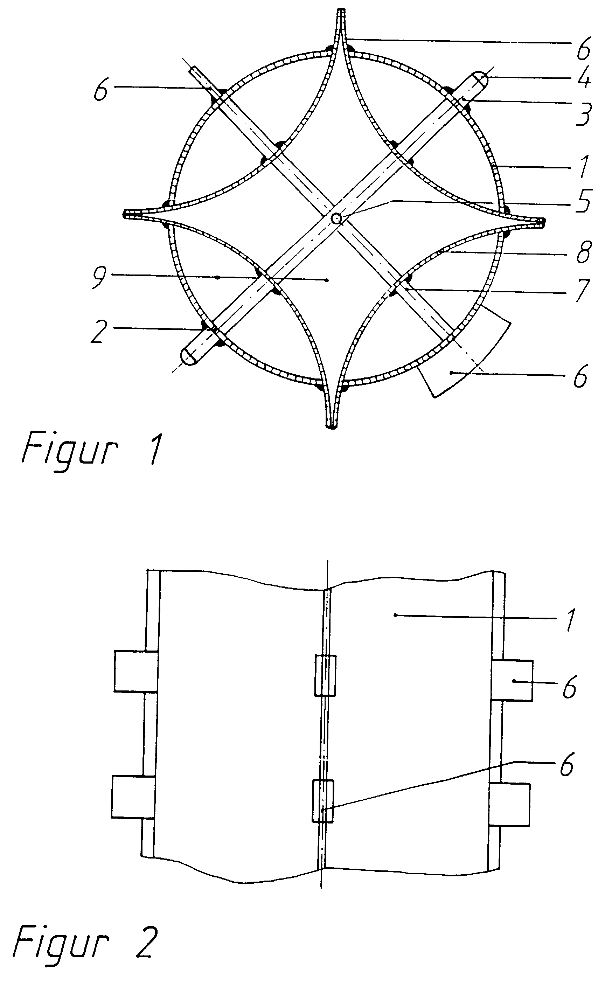

Die Figur 1 zeigt den Schnitt eines Rührers in Draufsicht, wobei der Rührerschaft 1 aus vier Teilen besteht und im Inneren durch vier segmentförmige Versteifungen 8 stabilisiert ist. Die segmentförmigen Versteifungen 8 sind an ihren Enden gleichzeitig als flächenförmige Rühreranbauten 6 ausgebildet. Sowohl durch den Rührerschaft 1 als auch durch die segmentförmigen Versteifungen 8 sind Rührerschaftbohrungen 2 eingebracht, durch welche zylinderförmige Rühreranbauten 3 mit gerundet verschlossenen Enden 4 eine zusätzliche Versteifung erzielen. Jede zylinderförmige Rührerschaftversteifung 7 besitzt mindestens eine Ausdehnungsöffnung 5. Der gesamte Hohlraum innerhalb des Rührerschaftes 1 ist mit einer porösen Sintermasse 9 ausgefüllt.
Eine Seitenansicht eines Rührerschaftes 1 ist in der Figur 2 dargestellt. In dieser Ausführungsvariante sind die flächenförmigen Rühreranbauten 6 in ihrer Scherfläche verschieden groß und unterschiedlich lang und in mehreren Ebenen angeordnet, so daß um den Rührerschaft 1 der Glasstrom vielfach zerrissen wird.

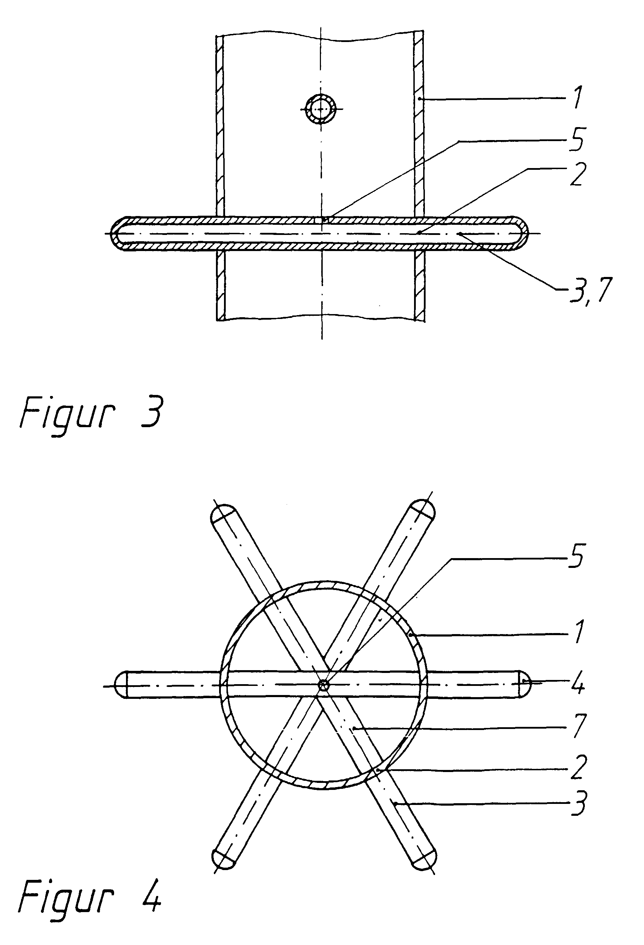

Die Figur 3 zeigt einen Seitenschnitt eines Rührerschaftsteiles. Der Rührerschaft 1 besteht aus einem platinhaltigen Zylinderrohr, in dem versetzt eine beliebige Anzahl von Rührerschaftbohrungen 2 gegenüberliegend angeordnet sind. In den jeweils gegenüberliegenden Rührerschaftbohrungen 2 sind zylinderförmige Rührerschaftsversteifungen 7, die in Rühreranbauten 3 mit gerundeten verschlossenen Enden 4 übergehen, durchgesteckt und am Rührerschaft 1 befestigt.

In der Figur 4, einer geschnittenen Draufsicht der Figur 3, sind die Anordnungen der zylinderförmigen Rühreranbauten 3 zu sehen. Dargestellt ist ihre um 60 ° versetzte Anordnung auf drei Höhenebenen. Es ergeben sich aus drei Rührerschaftversteifungen 7 mit Ausdehnungsöffnungen 5 sechs zylinderförmige Rühreranbauten 3.

Eine weitere Ausführungsvariante eines Rührers ist in den Figuren 5 und 6 dargestellt. Im Rührerschaft 1 sind, in diesem Fall nicht versetzt gezeichnet, Rührerschaftversteifungen 7 eingebracht. Auf den abgerundeten Enden 10 von zwei Rührerschaftversteifungen 7 ist ein flächenförmiger Rühreranbau 6 aufgebracht. Außerdem ist ein flächenförmiger Rühreranbau 6 gezeigt, der auf einem abgerundeten Ende 10 einer Rührerschaftversteifung 7 oder nur auf dem Rührerschaft 1 befestigt ist.

## Patentansprüche

1. Rühre für schmelzflüssiges Glas, bestehend aus einem Rührerschaft und mehreren Rühreranbauten und einem Verbindungsteil zur Rührerantriebsmaschine, dadurch gekennzeichnet, daß
- der zylinderförmige Rührerschaft (1) hohl ausgebildet ist und im Innenraum über die gesamte Glasstandhöhe mehrere zylinder- oder flächenförmige Rührerschaftversteifungen (7) und gegebenenfalls kreuz- und/oder segmentförmige Versteifungen (8) besitzt,
- der zylinderförmige Rührerschaft (1), die Rühreranbauten (3 ; 6) und Rührerschaftversteigungen (7 ; 8) eine Gerüstkonstruktion aus stabilisiertem und dispersionverfestigtem Platin oder stabilisierten und dispersionsverfestigten Platinlegierungen darstellen und Wanddicken zwischen 1,0 und 2,5 mm besitzen und
- die Rühreranbauten (3 ; 6) von den durch Rührerschaftbohrungen (2) hindurchragenden Rührerschaftversteifungen (7 ; 8) gebildet werden.

2. Rührer nach Anspruch 1,
dadurch gekennzeichnet, daß
die Rührerschaftversteifungen (7) zylinder- oder flächenförmig ausgebildet sind und mit der Oberfläche des Rührerschaftes (1) unlösbar bündig enden.

3. Rührer nach Anspruch 1,
dadurch gekennzeichnet, daß
daß die flächenförmigen Rühreranbauten (6) an den bündig endenden zylinderförmigen Rührerschaftversteifungen (7) des hohlen Rührerschaftes (1) befestigt sind.

4. Rührer nach einem der Ansprüche 1 bis 3,
dadurch gekennzeichnet, daß
jede Rührerschaftversteifung (7) mindestens eine Ausdehnungsöffnung (5) besitzt.

5. Rührer nach einem vier Ansprüche 1 bis 4,
dadurch gekennzeichnet, daß
Zylinder- oder flächenförmige Rühreranbauten (3 ; 6) in beliebigen Winkeln im Rührerschaft (1) angeordnet, ineinander gesteckt und am Rührerschaft (1) unlösbar verbunden sind.

6. Rührer nach einem der Ansprüche 1 bis 5,
dadurch gekennzeichnet, daß
er kreuz- und segmentförmige Versteifungen (8) und zylinder- und flächenförmige Rühreranbauten (3 ; 6) oder eine Kombination von mehreren Formen der Rühreranbauten (3 ;6) mit zusätzlichen Rührerschaftversteifungen (7) besitzt.

7. Rührer nach einem der Ansprüche 1 bis 6,
dadurch gekennzeichnet, daß
die als kreuz- und segmentförmige Versteifungen (8) endenden und mit dem Rührerschaft (1) verbundenen flächenförmigen Rühreranbauten (6) über die in das Glasbad eintauchende Höhe des Rührerschaftes (1) angeordnet sind.

8. Rührer nach einem der Ansprüche 1 bis 7,
dadurch gekennzeichnet, daß
ein flächenförmiger Rühreranbau (6) durchgehend über die in das Glasbad eintauchende Höhe des Rührerschaftes (1) angeordnet ist.

9. Rührer nach Anspruch 1 bis 8,
dadurch gekennzeichnet, daß
alle Hohlräume innerhalb des Rüherschaftes (1) mit einer keramischen Sintermasse (9) als zusätzliche Versteifung ausgefüllt sind.

10. Rührer nach Anspruch 1,
dadurch gekennzeichnet, daß
der Rührerschaft (1) am unteren Ende mit einer vorzugsweise runden Kappe vollständig verschlossen ist.

## Claims

1. A glass melt agitator consisting of an agitator shaft and some agitator attachments and a connecting part to the agitator drive characterised in that
- said cylindrical agitator shaft (1) is hollow having in its inner part several cylindrical or flat agitator shaft stiffeners (7) and, if desired, cross-shaped and/or segment-shaped stiffeners (8), distributed across the total area covered by the glass melt
- said cylindrical agitator shaft (1), said agitator attachments (3; 6) and said agitator shaft stiffeners (7; 8) have a frame of stabilised and dispersion-hardened platinum or stabilised and dispersion-hardened platinum alloys having a wall thickness between 1.0 and 2.5 mm,
- said agitator attachments (3; 6) are formed by said agitator shaft stiffeners (7; 8) passing through agitator shaft holes (2).

2. Agitator according to claim 1
characterised in that
said agitator shaft stiffeners (7) are cylindrical or flat and are permanently flush-mounted to the surface of said agitator shaft (1).

3. Agitator according to claim 1
characterised in that
said flat agitator attachments (6) are fastened to said flush-mounted cylindrical agitator stiffeners (7) of said hollow agitator shaft (1).

4. Agitator according to one of the claims 1 - 3
characterised in that
all of said agitator shaft stiffeners (7) have at least one expansion opening (5).

5. Agitator according to one of the claims 1 - 4
characterised in that
said flat or cylindrical agitator attachments (3; 6) are arranged at random angles in said agitator shaft (1), fit into each other, and are permanently connected to said agitator shaft (1).

6. Agitator according to one of the claims 1 - 5
characterised in that
it has cross-shaped and segment-shaped stiffeners (8) and cylindrical and flat agitator attachments (3; 6) or a combination of several agitator attachment types (3; 6) with additional agitator shaft stiffeners (7).

7. Agitator according to one of the claims 1 - 6
characterised in that
said flat agitator attachments (6) ending as said cross-shaped and segment-shaped stiffeners (8) and connected to said agitator shaft (1) are arranged across the length of said agitator shaft (1) immersing into the glass melt.

8. Agitator according to one of the claims 1 - 7
characterised in that
said flat agitator attachment (6) is arranged across the total length of said agitator shaft (1) immersing into the glass melt.

9. Agitator according to claims 1 - 8
characterised in that
all cavities within said agitator shaft (1) are filled with sinter ceramic material as an additional stiffener.

10. Agitator according to claim 1
characterised in that
said agitator shaft(1) is completely sealed at its lower end by a preferably round cap.

## Revendications

1. Agitateur pour du verre en fusion, comportant une tige d'agitateur et plusieurs pièces d'agitation ajoutées ainsi qu'une pièce de jonction à la machine de propulsion, caractérisé en ce que
- la tige d'agitateur cylindrique (1) est creuse et munie dans son intérieur, le long de la hauteur de remplissage de verre entière, de plusieurs renforts de tige d'agitateur soit cylindriques soit aplatis (7) et, le cas échéant, des renforts en croix et/ou en segment (8);
- la tige d'agitateur cylindrique (1), les pièces d'agitation ajoutées (3 ; 6) et les renforts de tige d'agitateur (7 ; 8) constituent une construction de cadre en platine stabilisé et durci par dispersion ou en alliages de platine stabilisés et durcis par dispersion et présentent des épaisseurs de paroi entre 1,0 et 2,5 mm ;
- les pièces d'agitation ajoutées (3 ; 6) sont constituées par des renforts de tige d'agitateur (7 ; 8) traversant des forures de tige d'agitation (2).

2. Agitateur selon revendication 1, caractérisé en ce que
- les renforts de tige d'agitateur (7) sont soit cylindriques soit aplatis et se terminent de façon à surface plane et indétachable avec la surface de la tige d'agitateur (1).

3. Agitateur selon revendication 1, caractérisé en ce que
- les pièces d'agitation ajoutées aplaties (6) sont fixées aux renforts de tige d'agitateur cylindriques se terminant de façon à surface plane (7) de la tige d'agitateur creuse (1).

4. Agitateur selon l'une des revendications 1 à 3, caractérisé en ce que
- chaque renfort de tige d'agitateur (7) est muni d'au moins un orifice d'expansion (5).

5. Agitateur selon l'une des revendications 1 à 4, caractérisé en ce que
- des pièces d'agitation ajoutées cylindriques ou aplaties (3 ; 6) sont disposées à n'importe quels angles dans la tige d'agitateur (1), emboîtées l'une dans l'autre et fixées à la tige d'agitateur (1) de façon indétachable.

6. Agitateur selon l'une des revendications 1 à 5, caractérisé en ce que
- celui-ci est muni de renforts en croix et en segment (8) et de pièces d'agitation ajoutées cylindriques et aplaties (3 ; 6) ainsi qu'une combinaison de plusieurs formes des pièces d'agitation ajoutées (3 ; 6) avec des renforts de tige d'agitateur supplémentaires (7).

7. Agitateur selon l'une des revendications 1 à 6, caractérisé en ce que
- les pièces d'agitation ajoutées aplaties (6) se terminant comme des renforts en croix et en segment (8) et étant fixées à la tige d'agitateur (1) sont disposées autour de la longueur de la tige d'agitateur plongeant dans le bain de verre.

8. Agitateur selon l'une des revendications 1 à 7, caractérisé en ce que
- une pièce d'agitation ajoutée (6) est disposée autour de la longueur de la tige d'agitateur (1) plongeant dans le bain de verre dans son ensemble.

9. Agitateur selon revendications 1 à 8, caractérisé en ce que
- tous les espaces creux au dedans de la tige d'agitateur (1) sont remplis d'une matière frittée céramique (9) servant de renfort supplémentaire.

10. Agitateur selon revendication 1, caractérisé en ce que
- la tige d'agitateur (1) est fermé complètement par son bout inférieur d'un chapeau rond de préférence.
